Europäisches Patentamt

European Patent Office

Office européen des brevets

(11) Veröffentlichungsnummer : **0 077 292**
**B1**

(12) **EUROPÄISCHE PATENTSCHRIFT**

(45) Veröffentlichungstag der Patentschrift :
02.01.86

(21) Anmeldenummer : **82730128.4**

(22) Anmeldetag : **08.10.82**

(51) Int. Cl.⁴ : **H 04 Q 11/02, H 04 B 9/00,
G 02 F 2/00**

(54) **Nachrichtennetz mit Monomodefasern als Übertragungsmedium für optische Kanäle im Lichtträger-Frequenzbereichsmultiplex.**

(30) Priorität : **08.10.81 DE 3140178**

(43) Veröffentlichungstag der Anmeldung :
**20.04.83 Patentblatt 83/16**

(45) Bekanntmachung des Hinweises auf die Patenterteilung : **02.01.86 Patentblatt 86/01**

(84) Benannte Vertragsstaaten :
**AT BE CH DE FR GB IT LI LU NL SE**

(56) Entgegenhaltungen :
**EP-A- 0 031 557
US-A- 3 864 521
IEEE JOURNAL OF QUANTUM ELECTRONICS, Band QE-17, Nr. 6, Juni 1981, Seiten 897-905, New York, USA F. FAVRE et al.: "Progress towards heterodyne-type single-mode fiber communication systems"
INTERNATIONAL SWITCHING SYMPOSIUM, 21.-25. September 1981, Session 22B, Paper 1, Seiten 1-8, Montreal, CA. J.G. DUPIEUX et al.: "The applications of fiber optics to the introduction of new services in local networks"**

(73) Patentinhaber : **Heinrich-Hertz-Institut für Nachrichtentechnik Berlin GmbH
Einsteinufer 37
D-1000 Berlin 10 (DE)**

(72) Erfinder : **Bachus, Ernst-Jürgen, Dr.-Ing.
Wikinger Ufer 6
D-1000 Berlin 21 (DE)**
Erfinder : **Strebel, Bernhard, Dr. Ing.
Am Vierrutenberg 12 c
D-1000 Berlin 28 (DE)**

(74) Vertreter : **Wolff, Konrad
Heinrich-Hertz-Institut für Nachrichtentechnik Berlin GmbH Einsteinufer 37
D-1000 Berlin 10 (DE)**

**Beschreibung**

Die Erfindung bezieht sich auf ein Nachrichtennetz mit Monomodefasern als Übertragungsmedium für optische Kanäle im Lichtträger-Frequenzbereichsmultiplex, die nach dem Heterodynprinzip für die Herstellung von Verbindungen zwischen den angeschlossenen Nachrichten-Quellen und -Senken bereitgestellt werden.

Hierbei wird von einem Stand der Technik ausgegangen, wie er aus « IEEE Journal of Quantum Electronics » Bd. QE-17, Nr. 6, Juni 1981, S. 897-905, bekannt ist. Bei der dort beschriebenen Anordnung mit den drei Hauptbestandteilen, Sender, Übertragungsleitung und Empfänger, besteht die Aufgabenstellung darin, große Entfernungen, z. B. 200 km, von einem Sender zu einem Empfänger ohne zwischengeschaltete Repeater zu überbrücken, wobei der Bereich der geringsten Dämpfung des Übertragungsmediums durch Anwendung des Heterodyn-Prinzips voll ausgenutzt werden soll. Ein solches System eignet sich demnach für Verbindungen in der sogenannten Fernebene, in der eine bestimmte Anzahl von Kanälen bereit zu halten ist, die nach Bedarf und im Rahmen der maximalen Kapazität von wechselnden Nachrichten-Quellen und -Senken belegt werden können.

In optischen Nachrichtensystem, die auf dem Heterodyn-Prinzip beruhen, für die jedoch die Überbrückung großer Entfernungen von weitaus geringerer Bedeutung ist, d. h. also für Netze in der sogenannten Ortsebene, können den dort angeschlossenen Teilnehmern also über einen einzigen, gemeinsamen Lichtwellenleiter in sehr großer Zahl Kanäle angeboten werden, auf die sie bei Verteildiensten, z. B. Runkfunkprogrammen, frei und bei Vermittlungsdiensten, z. B. Telefon, Bild-Telefon, Datenverkehr, mit Hilfe einer Vermittlungssteuerung zugreifen können.

Die Erfindung unterscheidet sich damit von den bisher bekannten Systemen der optischen Nachrichtentechnik in einer Weise, die durch Vergleich zum Entwicklungsverlauf in der Rundfunktechnik veranschaulicht werden kann. Hier und dort wurde zunächst der sogenannte Geradeausempfang verwirklicht. Dabei wird auf einer bestimmten Wellenlänge, gegebenenfalls auf einigen — wenigen — bestimmten Wellenlängen, gesendet und empfangen. Mit Hilfe des Überlagerungsprinzips, das demgegenüber eine wesentlich erhöhte Grenzempfindlichkeit und Selektivität ermöglicht, kann jedoch die Übertragungskapazität des Mediums vollkommen ausgenutzt werden. Die Vorteile, die dieses Prinzip für die Rundfunktechnik brachten, sind von überragender, inzwischen aber allgemein wohl bereits als Selbstverständlichkeit angesehener und in der Wichtigkeit in Vergessenheit geratener Bedeutung. Der « Superhet »-Empfänger verhalf der Rundfunktechnik erst zu ihrem eigentlichen Durchbruch und ist heute dort Standard.

Der Erfindung liegt als Aufgabenstellung die Schaffung eines Nachrichtennetzes mit optischen Kanälen zugrunde, in dem eine große Zahl von Teilnehmern angeschlossen ist, denen schmal- und insbesondere breitbandige Kanäle zur Verfügung zu stellen sind. Dabei sollen diese Kanäle nicht nur für reine Verteildienste, z. B. Fernsehprogramme, sondern auch oder hauptsächlich für individuelle Dienste, z. B. Datenverkehr, Fernsprechen, Fernsehkonferenzen, Bildfernsprechen und dergleichen mehr Verwendung finden. Das bedeutet, eine große Anzahl breitbandiger Kanäle ist nicht nur zu übertragen, sondern auch zu vermitteln. Hierfür kommt es weit weniger auf große Übertragungslängen und viel mehr darauf an, eine flexible Zuteilung von Kanälen bzw. einen wahlfreien Zugriff auf die Kanäle zu ermöglichen.

Die Lösung dieser Aufgabe ist gemäß der Erfindung gekennzeichnet durch :

— eine Laser-Referenzeinheit mit einem Verteiler zur Versorgung von Sende- und Empfangseinrichtungen, die den angeschlossenen Nachrichten-Quellen und -Senken zugeordnet sind, mit einer Lichtträger-Referenz ;

— durchstimmbare Sendelaser in den Sendeeinrichtungen, mit denen jeweils eine Trägerfrequenz für die Signale bereitgestellt wird, die von den zugeordneten Nachrichtenquellen geliefert werden ;

— durchstimmbare Lokallaser in den Empfangseinrichtungen, mit denen jeweils eine feste, gleichzurichtende Zwischenfrequenz für die Signale gebildet wird, die für die zugeordneten Nachrichtensenken bestimmt sind ; und

— ein gemeinsames Lichtfrequenzkanalvielfach, über das die Sendeeinrichtungen und die Empfangseinrichtungen verknüpft sind.

Für die Erfindung und ihre Ausführungsformen ist von wesentlicher Bedeutung, daß in der optischen Nachrichtentechnik dem ultrabreiten Medium Glasfaser Aufgaben zugewiesen werden können, die der Äther für die Rundfunktechnik seit langem erfüllt : ein Nachrichtenknoten für viele Kommunikationsteilnehmer zu sein. Angesichts von rechnerisch etwa 250 000 möglichen Breitbandkanälen auf einer Faser zeichnet sich damit eine neuartige Konzeption künftiger Nachrichtennetze ab : die koppelfeldlose Verteilung und Vermittlung der Dienste über Lichtfrequenzkanäle mit heterodynem Vielfachzugriff für alle Teilnehmer. Wegen der großen Gesamtbreite kann hier zudem jeder optische Kanal so großzügig bemessen werden, daß auf eine Unterteilung in Schmal- und Breitbandkanäle verzichtet werden kann. Ähnliches gilt bezüglich Datenreduktionssystemen und Mehrfachausnutzung in Zeitmultiplextechnik oder dergleichen. Andererseits können bei einem derartigen großen Kanalangebot viele Dienste mit geringem Zeitversatz bereitgestellt werden (z. B. ein Spielfilm normaler Dauer auf ca. 100 Kanälen und jeweils ca. 1 Minute Zeitversatz), wodurch sich das utopisch hoch erscheinende Kanalangebot bezüglich der Dienste- bzw. Programminhalte dieser Kanäle wieder beträchtlich verringert.

Bei der Erfindung wird also sowohl bezüglich der Übertragung als auch bezüglich der Vermittlung vom Heterodyn-Prinzip Gebrauch gemacht. Von überragender und überraschender Bedeutung ist dabei, daß für die Vermittlung kein Verbindungswegenetzwerk im üblichen Sinn benötigt wird. Die Durchschaltung eines Verbindungsweges zwischen einer Quelle und einer Senke kann dezentral in den Sende- und Empfangsgeräten erfolgen, indem alle ausgesendeten Träger über das gemeinsame Lichtfrequenzkanalvielfach nach Art eines völlig passiven Knotens an alle angeschlossenen Empfangsgeräte gelangen und dort eine Abstimmung auf den betreffenden Träger vorgenommen wird.

Wie bei jeder Durchschaltung kann auch hier zwischen einem steuernden Teil und einem gesteuerten Teil unterschieden werden. Die zu steuernden Teile können sich bei Ausführungsformen der Erfindung in den Sende- und den Empfangsgeräten befinden. Die steuernden Teile können hingegen an einem gemeinsamen, zentralen Ort vorgesehen werden, um nicht nur reine Verteildienste, z. B. Fernsehprogramme, sondern auch individuelle Dienste, z. B. Bildfernsprechen, anbieten zu können.

Wie auch in der Runkfunktechnik kommen die Vorzüge des Überlagerungsprinzips für die optische Nachrichtentechnik bei der Erfindung voll zur Geltung. Durch die Umsetzung des Empfangssignals mittels Lokaloszillator in einen Zwischenfrequenzbereich lassen sich Trennschärfe und Empfindlichkeit im Vergleich zum Geradeausempfang erheblich verbessern, weil für den Zwischenfrequenzbereich Filter mit sehr hoher Güte bezüglich der Eingangsfrequenz wesentlich einfacher zu realisieren sind. Da bei optischen Kanälen das empfangene Lichtwellensignal mit der Lichtwelle eines lokalen Lasers überlagert und durch Mischung dieser beiden beim Empfänger eine Zwischenfrequenz im Mikrowellenbereich erzeugt wird, braucht die Trennung der Kanäle nicht im optischen Bereich durchgeführt zu werden, in dem wegen der dort erreichbaren Filtersteilheiten der minimale Kanalabstand in der Größenordnung von 10 THz liegt. Im Mikrowellenbereich hingegen mit Filtern wesentlich höherer Güte läßt sich in dem zur Verfügung stehenden Frequenzband bei gleichzeitiger Erhöhung der Empfindlichkeit eine um einige Zehnerpotenzen höhere Anzahl von Trägern bzw. Kanälen als beim « Geradeausempfang » unterbringen.

Um bei dem für die Erfindung wesentlichen wahlfreien Zugriff auf die Kanäle dennoch feste Filter verwenden zu können, müssen die betreffenden Frequenzen in den Sende- und in den Empfangseinrichtungen, bei der Erfindung also die Sendelaser und die Lokallaser, durchstimmbar sein. Derartige Laser befinden sich in der Entwicklung und werden zweifellos bei dem stürmischen technologischen Fortschritt auf diesem Gebiet von der Bauelemente-Industrie bald in ausreichender Quantität und Qualität angeboten.

Zur Bildung einer Zwischenfrequenz muß bekanntlich eine unmodulierte Welle herangezogen werden, die in der Rundfunktechnik in den Empfängern selbst erzeugt wird. Dies kann im Prinzip so auch bei Ausführungsformen der Erfindung erfolgen, wird aber aus den nachfolgend näher erläuterten Umständen modifiziert. Es wird eine dazu geeignete Lichtträgerfrequenz-Referenz zur Verfügung gestellt, von der sich die verschiedenen Frequenzen, durchaus auch mit unterschiedlichen Trägerfrequenzabständen, für die Sende- und die Empfangseinrichtungen ableiten lassen. Die Gründe hierfür liegen insbesondere in Anforderungen an die Stabilität der zu erzeugenden Frequenzen und in dem dienstespezifischen Bandbreitenbedarf.

Daß für die Vermittlung der Kanäle bei der Erfindung kein Verbindungswegenetzwerk im üblichen Sinne benötigt wird und für die Verknüpfung der Sende- und der Empfangseinrichtungen ein völlig passives gemeinsames Lichtfrequenzkanalvielfach vorgesehen ist, kann wiederum durch einen Vergleich zur herkömmlichen Rundfunktechnik erläutert werden. Dort bildet der Äther das passive Frequenzvielfach für die nicht an Leitungen gebundenen Radio-Wellen, hier ist es dementsprechend ein festes, Lichtwellen leitendes Medium, in das alle ausgesendeten Frequenzen eingekoppelt und aus dem alle zu empfangenden Frequenzen, mit wahlfreiem Zugriff ausgekoppelt werden können.

Bei bevorzugten Ausführungsformen der Erfindung kann die Laser-Referenzeinheit ein festes Lichtträger-Referenzraster erzeugen. In den mit der Lichtträger-Referenz zu versorgenden Sende- und Empfangseinrichtungen kann auf diese Weise eine einfache Synchronisierung auf die zugeteilte Frequenz erfolgen.

Obwohl der Zugriff auf die Kanäle auch rein dezentral erfolgen könnte, d. h. jeder Sender sucht sich selbst einen freien Kanal und der oder die betreffenden Empfänger überwachen das gesamte Kanalangebot selbsttätig auf für sie bestimmte Nachrichten, ist bei komfortableren Ausstattungen derartiger moderner Nachrichtennetze eine zentrale Überwachung und/oder Prüfung unumgänglich. Nicht nur aus diesem Grunde ist es bei Auführungsformen der Erfindung vorteilhaft, einen zentralen Rechner für die Zuordnung und Verwaltung von Kanälen vorzusehen. Die dort zu erfüllenden Aufgaben beschränken sich nicht nur auf die Signalisierung während des Aufbaus und zur Auslösung einer Verbindung. Für reine Verteildienste, bei denen eine Vielzahl von Empfängern auf einen einzigen Sender abgestimmt wird, kann die Zuweisung betreffender Kanäle ohnehin einfür allemal fest vorgegeben werden. Für individuelle Dienste, insbesondere auch für Konferenzschaltungen, empfiehlt sich hingegen eine flexible Kanalzuweisung und -verwaltung, die beispielsweise für ein Nachrichtennetz in der Ortsebene auch örtlich in einer gemeinsamen Vermittlungsstelle untergebracht werden sollte.

Sofern keine langen Übertragungswege im Bereich der Vermittlung auftreten, was bei der Grundform der Erfindung der Fall ist, brauchen nicht einmal die Grenzen der bevorzugten dämpfungsarmen Übertragungsbreite einer Monomodefaser beachtet zu werden, d. h. zumindest die Ultra- und Infra-Grenzbereiche sind ebenfalls nutzbar. Auch ohne dies ergibt sich bei bevorzugten Ausführungsformen der Erfindung durch breitbandige Kanäle mit einem gegenseitigen Lichtträgerabstand im GHz-Bereich, z. B. 2 GHz entsprechend etwa 0,007 nm bei $\lambda = 1$ μm, eine Kapazität von mehreren zehntausend Kanälen.

Der Verteiler, über den die Empfangs- und Sendeeinrichtungen mit der Lichtträger-Referenz versorgt werden, kann als einfacher optischer Sternkoppler ausgebildet sein. Obwohl solche Sternkoppler unvermeidliche Verluste aufweisen, lassen sich diese durch die hohe Empfindlichkeit beim Heterodyn-Prinzip leicht kompensieren, so daß die Lichtträger-Referenz-Versorgung mit derartig einfachen Mitteln möglich ist.

Entsprechende Voraussetzungen gelten auch für das gemeinsame Lichtfrequenzkanalvielfach, das für die Verknüpfung der Sende- und Empfangseinrichtungen ebenfalls bei vorteilhaften Ausführungsformen der Erfindung als optischer Sternkoppler ausgebildet sein kann. Die Verknüpfung kann selbstverständlich mit jedem monomodal leitenden Medium, so auch im Bedarfsfall mit einem räumlich weit verteilten, verzweigten Fasernetzwerk herbeigeführt werden. Derartige Fasernetzwerke sind für diesen Zweck weitestgehend strukturunabhängig. Einschränkungen bestehen beispielsweise insoweit, als unerwünschte Reflexionen zu vermeiden sind.

Aus Gründen der Betriebssicherheit aber auch zur Abwicklung der Verwaltungsaufgaben bei der Kanalvermittlung empfiehlt es sich, bei Ausführungsformen der Erfindung dem zentralen Rechner eine eigene Empfangseinrichtung zuzuordnen. Diese ist, wie auch alle anderen Empfangseinrichtungen, an das gemeinsame Lichtfrequenzkanalvielfach anzuschließen, so daß damit der gesamte im Netz abgewickelte Verkehr laufend, d. h. jeder Kanal stichprobenartig überwacht werden kann.

Die einzelnen Systemkomponenten, seien es Regelschaltungen, durchstimmbare Laser, Synthetisierschaltungen usw., also sowohl rein elektronische als auch optoelektronische Bauteile sollten in integrierter Technik aufgebaut sein. Bei entsprechender Konzeption können dadurch insbesondere modulare Einheiten für die Sende- und Empfangseinrichtungen gebildet werden.

In der Zeichnung sind Ausführungsformen der Erfindung schematisch dargestellt. Dabei zeigen:

Figur 1: ein Blockschaltbild einer Vermittlungsstelle für optische Kanäle;

Figur 2: Schaubilder für Kanalbelegungen eines Lichtwellenleiters, nämlich:

    a) für optische Einkanalübertragung,

    b) für λ-Multiplex (ca. 40 Kanäle),

    c) für Lichtfrequenzmultiplex (ca. 250 000 Kanäle).

Figur 3: Prinzipdarstellung der Funktionsweise des optischen Heterodynempfangs,

Figur 4: Blockschaltbild, ähnlich Fig. 1, für ein Vermittlungsnetz mit Sternstruktur,

Figur 5: Prinzipdarstellung eines Vermittlungsnetzes mit Linienstruktur und

Figur 6: Blockschaltbild für ein Verteilnetz mit Sternstruktur.

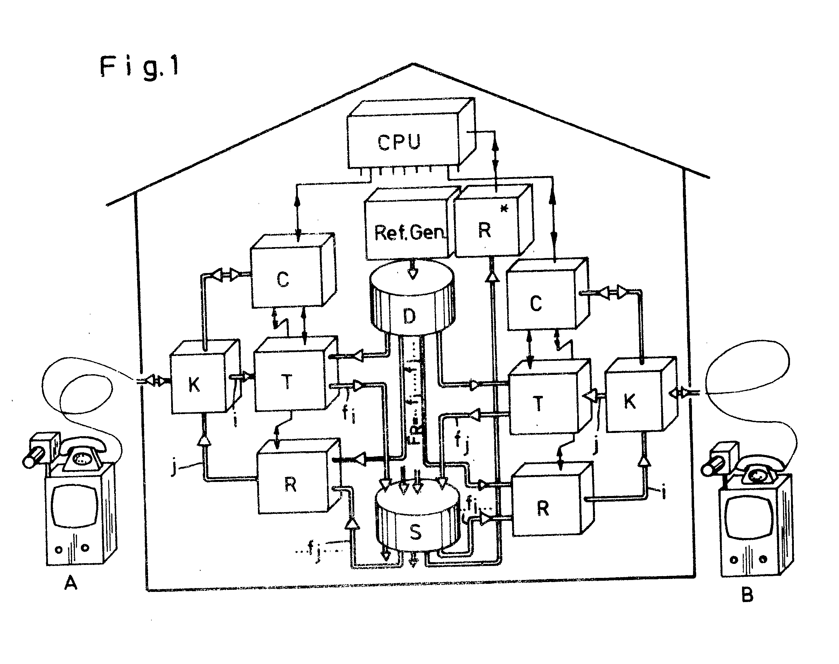

In einem Nachrichtennetz gemäß Fig. 1 sind Teilnehmerstationen A, B ... z. B. über Monomodefasern an eine Vermittlungsstelle oder Zentrale angeschlossen. Die Teilnehmerstationen sind mit verschiedenartigen Endgeräten, insbesondere solchen für Breitbanddienste wie Fernsehprogramme und Bildfernsprechen ausrüstbar. Für jedes Endgerät ist in der Vermittlungsstelle bzw. Zentrale ein optischer Richtkoppler K vorzusehen, über den die optischen Signale, die für ein Endgerät bestimmt sind oder von dort geliefert werden, von bzw. zu den betreffenden Empfangseinrichtungen R, Sendeeinrichtungen T und Steuergeräten C geführt werden. Ein Steuergerät C kann für mehrere Empfangseinrichtungen R und Sendeeinrichtungen T einer Teilnehmerstation A, B ... zuständig sein.

Eine Laser-Referenzeinheit, mit Ref.-Gen. bezeichnet, erzeugt die Lichtträger-Referenz, die allen Empfangseinrichtungen R und Sendeeinrichtungen T über einen optischen Verteiler D zugeführt wird. Die Sendeeinrichtungen T speisen die bei ihnen modulierten Trägerfrequenzen in das Lichtfrequenzkanalvielfach S. Jedes Empfangssignal erscheint an allen Ausgängen, die zu den Empfangseinrichtungen R, R* führen. Die durch Doppellinien dargestellten Verbindungen sind optische Verbindungswege (Monomodefasern), als einfache Striche dargestellte Leitungen können auch elektrische Signalleitungen sein. Die eingezeichneten Pfeile geben die Richtung des Signaltransports an. Aus Gründen der Übersichtlichkeit sind die Einrichtungen, die zu jeder Teilnehmerstation gehören, nur für zwei Teilnehmer A und B dargestellt.

Nachfolgend wird zur näheren Erläuterung der Fig. 1 eine Bildfernsprechverbindung zwischen dem sendenden Teilnehmer A und dem empfangenden Teilnehmer B beschrieben. Der Teilnehmer A gibt eine Dienste-Kennung und seinen Zielteilnehmer z. B. als Ziffernfolge über sein Endgerät ein. Diese Signale gelangen über den betreffenden optischen Richtkoppler K an das zugehörige Steuergerät C und von dort aus mit der Absenderadresse an den zentralen Rechner CPU in der Vermittlungsstelle. Der zentrale Rechner CPU prüft, ob der gerufene Teilnehmer B frei oder besetzt ist. Teilnehmer B sei frei, wird gerufen und meldet sich. Der zentrale Rechner CPU teilt ein freies Kanalpaar (fi, fj) zu und gibt diese Informationen an die beiden betreffenden Steuergeräte C. Die Steuergeräte C veranlassen ihre Sendeeinrichtungen T und Empfangseinrichtungen R, auf die Kanäle i und j einzurasten. Die Frequenzen fi und fj sind im Lichtträger-Referenzraster der Frequenzen $f_R$ enthalten. Damit ist die Verbindung aufgebaut. Der Nachrichtenaustausch — Bild und Ton — vom Teilnehmer A zum Teilnehmer B findet auf der Trägerfrequenz fi, in der Gegenrichtung auf der Trägerfrequenz fj statt. Das Ende der Verbindung wird z. B. durch Auflegen des Handapparates eines der beiden Teilnehmer A oder B ausgelöst.

Das Empfangsgerät R* — sowie ein Sendegerät T*, das hier nicht dargestellt ist — dienen insbesondere der Überwachung oder ordnungsgemäßen Belegung der Kanäle.

Derartige Ausführungsformen der Erfindung sind universell einsetzbar, d. h. sie sind sowohl für kleine Anlagen (Nebenstellenanlagen, Inhouse-Kommunikationsnetze) als auch für schnelle Rechnerverbundsysteme, Bussysteme und dergleichen geeignet.

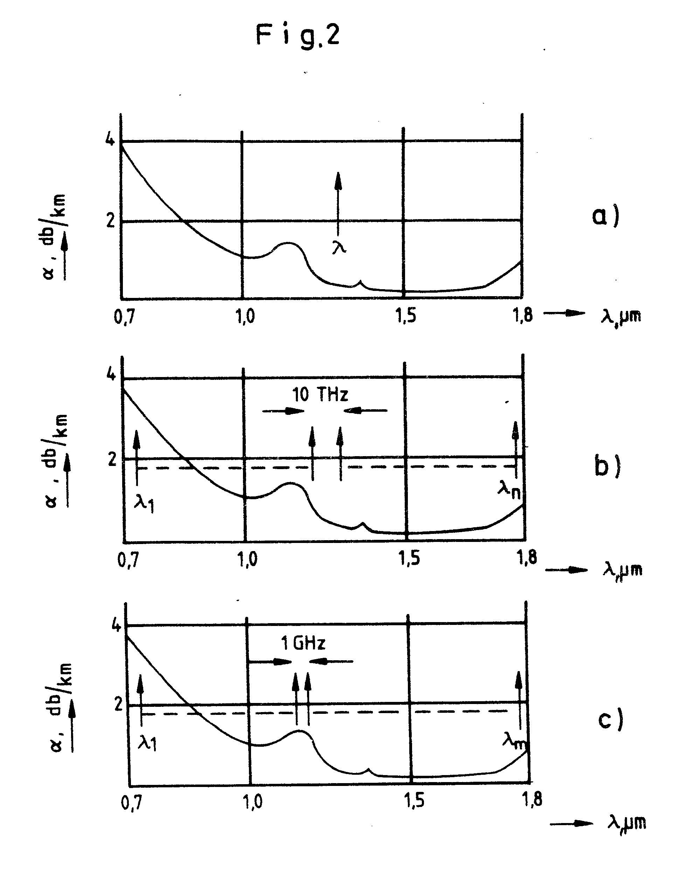

Die Fig. 2 veranschaulicht die Fortschritte der optischen Nachrichtentechnik bezüglich der Ausnutzung der Übertragungskapazität eines Lichtwellenleiters.

Zunächst wurde nur ein Lichtträger über eine Faser gesendet (Fig. 2 a).

Danach kamen Bestrebungen, die Übertragungskapazität der Faser durch die λ-Multiplextechnik besser auszunutzen, indem mehrere Lichtträger unterschiedlicher Wellenlänge gleichzeitig über die Faser übertragen (Fig. 2 b) und am Faserausgang durch optische Filter wieder getrennt werden. Beim derzeitigen Stand der Filter- und Lasertechnik müssen die Lichtträger λ₁, ... λₙ wenigstens einige zehn Nanometer auseinanderliegen, um eine sichere Trennung zu ermöglichen. Wählt man einen Wellenlängenabstand von z. B. 30 nm (entsprechend etwa 10 THz), so lassen sich in dem dämpfungsarmen Wellenlängenbereich von 0.7 bis 1.8 μm einer modernen Monomodefaser etwa 40 Lichtträger unterbringen. Die λ-Multiplextechnik entspricht in der Rundfunktechnik dem Geradeausempfang, auch dort werden die empfangenen Signale durch Hochfrequenzfilter getrennt.

Beim optischen Heterodynempfang (Fig. 2 c) werden die Kanäle nicht mehr im optischen Bereich getrennt — wie bei der λ-Multiplextechnik — sondern mit Hilfe einer Zwischenfrequenz, die z. B. im Mikrowellenbereich liegen kann. Im Mikrowellenbereich lassen sich, gemessen an der Lichtfrequenz, Filter mit sehr hoher Steilheit realisieren. Wählt man einen Lichtträgerabstand von z. B. 1 GHz, so lassen sich über eine Faser etwa 250 000 Lichtträger übertragen und mit Hilfe des Heterodynprinzips am Empfangsort wieder trennen.

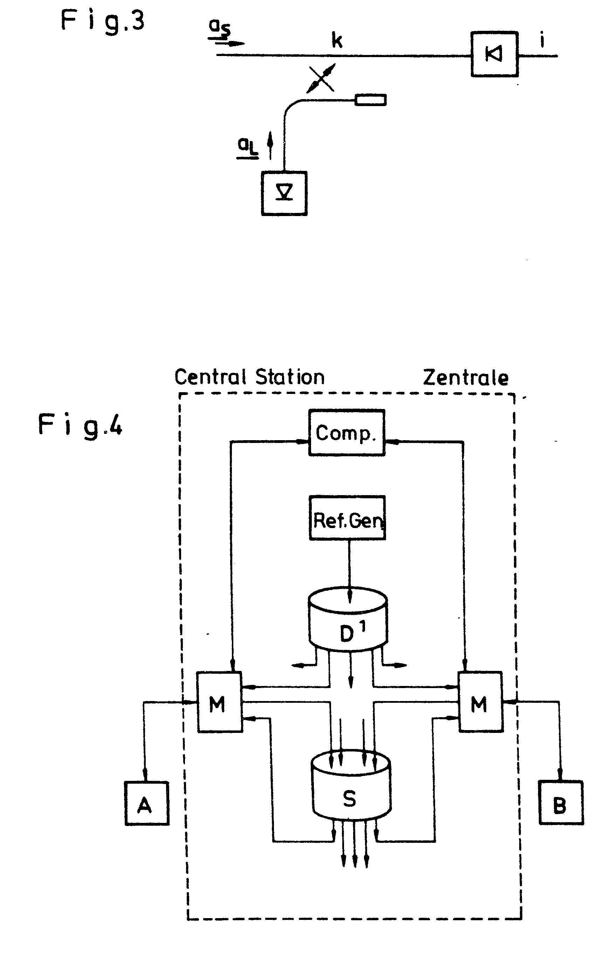

Fig. 3 zeigt das Prinzip eines optischen Überlagerungsempfängers. Auf einen optischen Detektor mit lichtleistungsproportionalem Ausgangsstrom (z. B. PIN-Dioden) laufen über einen Faserrichtkoppler (Auskoppelfaktor k) die Lichtsignalwellengröße $a_s$ und die Lokallaserwellengröße $a_L$ zu. Er liefert ein Signal bei einer Zwischenfrequenz.

Die Umsetzung in den Zwischenfrequenzbereich erfolgt proportional zu dem Produkt der Wellengrößen, sofern $a_s$ und $a_L$ gleiche Feldform und Polarisation haben, also räumlich kohärent sind. Ebenso ist es notwendig, die Laserfrequenz so zu stabilisieren, daß sich eine konstante Zwischenfrequenz ergibt.

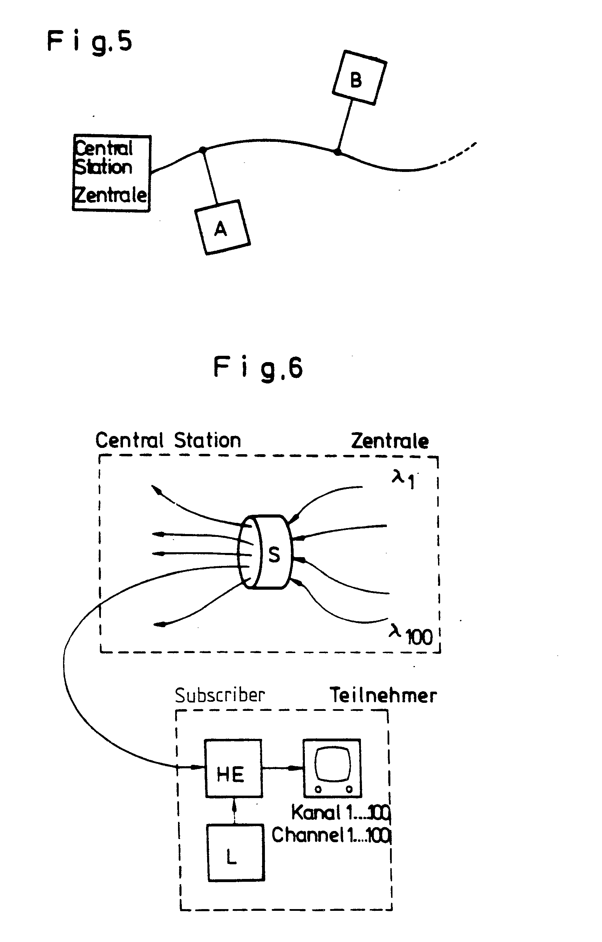

Fig. 4 zeigt schematisch eine Ausführungsform der Erfindung, bei der das Heterodynprinzip ausschließlich zur koppelpunktfreien zentralen Vermittlung in einem Sternnetz eingesetzt wird. Die Übertragung auf den Teilnehmeranschlußleitungen kann hier in konventioneller Weise erfolgen.

In der Zentrale ist jedem Teilnehmer A, B, ... ein Sende- und Empfangsmodul M zugeordnet, mit dem er auf ein optisches Frequenzvielfach (optischer Sternkoppler S) Zugriff erhält. Die innere Seite jedes teilnehmereigenen Moduls M besitzt einen durchstimmbaren Sendelaser mit Modulator und einen ebenfalls durchstimmbaren Empfangslokallaser. Alle Module M senden auf die Eingangsseite des Sternkopplers S und sind an dessen Ausgang mit dem gesamten Nachrichtenstrom verbunden, filtern aber mittels Heterodynempfang nur den für sie bestimmten Kanal aus. Zur Unterteilung des Frequenzbereichs in verschiedene Kanäle wird von einem Referenzgenerator Ref. Gen. über einen Sternkoppler D' ein Trägerfrequenzraster ausgesendet, auf das sich die Teilnehmermodule M synchronisieren. Der Prozeßrechner Comp. hat die Aufgabe, die freien Lichtkanäle für die Verbindungen auszuwählen, die Teilnehmer zu veranlassen, ihre Stationen auf diese Kanäle einzustellen und die Kanalbelegungen zu überprüfen. Über den Rechner Comp. läßt sich bequem eine Videokonferenz zwischen mehreren Teilnehmern durch entsprechende Abstimmbefehle des Rechners Comp. an die Heterodynempfänger schalten.

In einem Liniennetz gemäß Fig. 5 werden alle Teilnehmer A, B, ... über eine einzige Faser miteinander verbunden. Jedem Sendelaser eines jeden Teilnehmers wird bei Bedarf eine Lichtfrequenz zugeordnet, alle Sendefrequenzen werden auf die Frequenz des Referenzlasers bezogen, der sich in der Zentrale befindet. Jeder Teilnehmer überwacht die Nachrichten aller anderen Teilnehmer und entnimmt nur die, die für ihn bestimmt sind. Die Verbindung der Teilnehmer A und B kann auch über einen Rechner in der Zentrale vermittelt werden, der dann die entsprechenden Abstimmbefehle an die Heterodynempfänger der Teilnehmer gibt.

Ein fasersparendes Liniennetz mit Zeitmultiplextechnik und optischer Übertragungstechnik mit Geradeausempfang versagt, sobald viele Teilnehmer breitbandige Nachrichten austauschen. Aus der Summeninformation aller Teilnehmer resultiert eine entsprechend hohe Übertragungsgeschwindigkeit auf der Faser und eine entsprechend hochratige Elektronik bei jedem Teilnehmer. Diese Probleme lassen sich überwinden, wenn statt der Basisband-Zeitmultiplextechnik die optische Frequenzmultiplextechnik gemäß der Erfindung eingesetzt wird. Ein solches Liniennetz, das die Bandbreite der Faser durch eine kohärente optische Übertragungstechnik vollkommen ausnutzen kann, gestattet einer großen Teilnehmerzahl den Austausch von breitbandiger Information ; eine Erweiterung des Netzes durch zusätzliche Teilnehmer erfordert nur einen entsprechend höheren Durchstimmbereich für die einzelnen Heterodynempfänger.

Zur Verteilung von z. B. 100 Fernsehsignalen wird gemäß Fig. 6 in der Zentrale jedem Fernsehkanal ein Lichtträger $\lambda_1$ ... $\lambda_{100}$ zugeordnet. Über einen Sternkoppler S werden alle Lichtträger in die Teilnehmeranschlußleitungen eingespeist. Jeder Teilnehmer verfügt über einen optischen Heterodynempfänger, die Auswahl der verschiedenen Fernsehprogramme erfolgt bei konstanter Zwischenfrequenz mit einem durchstimmbaren Lokallaser.

Die durch die Leistungsaufteilung im Sternkoppller erzeugte Dämpfung der Signalpegel auf den Teilnehmeranschlußleitungen wird teilweise durch die erhöhte Empfindlichkeit der Heterodynempfänger kompensiert. Sind optische Verstärker als Standardbauelemente verfügbar — beispielsweise mit Hilfe der Integrierten Optik auf einem Chip gefertigt — könnten diese z. B. zwischen dem Sternkoppler S und den Teilnehmeranschlußleitungen angeordnet werden.

## Patentansprüche

1. Nachrichtennetz mit Monomodefasern als Übertragungsmedium für optische Kanäle im Lichtträger-Frequenz-bereichsmultiplex, die nach dem Heterodyn-Prinzip für die Herstellung von Verbindungen zwischen den angeschlossenen Nachrichten-Quellen und -Senken bereitgestellt werden, gekennzeichnet durch :
— eine Laser-Referenzeinheit (Ref.-Gen) mit einem Verteiler (D) zur Versorgung von Sende- (T) und Empfangs- (R) Einrichtungen, die den angeschlossenen Nachrichten-Quellen und -Senken zugeordnet sind, mit einer Lichtträger-Referenz ;
— durchstimmbare Sendelaser in den Sendeeinrichtungen (T), mit denen jeweils eine Trägerfrequenz für die Signale bereitgestellt wird, die von den zugeordneten Nachrichtenquellen geliefert werden ;
— durchstimmbare Lokallaser in den Empfangseinrichtungen (R), mit denen jeweils eine feste, gleichzurichtende Zwischenfrequenz für die Signale gebildet wird, die für die zugeordneten Nachrichtensenken bestimmt sind und
— ein gemeinsames Lichtfrequenzkanalvielfach (S), über das die Sendeeinrichtungen (T) und die Empfangseinrichtungen (R) verknüpft sind.

2. Nachrichtennetz nach Anspruch 1, gekennzeichnet durch eine Laser-Referenzeinheit (Ref.-Gen), die ein festes Lichtträger-Referenzraster erzeugt.

3. Nachrichtennetz nach Anspruch 1 oder 2, gekennzeichnet durch einen zentralen Rechner (CPU) für die Zuordnung und Verwaltung von Kanälen.

4. Nachrichtennetz nach einem der Ansprüche 1 bis 3, gekennzeichnet durch breitbandige Kanäle mit einem gegenseitigen Lichtträgerfrequenzabstand im GHz-Bereich.

5. Nachrichtennetz nach einem der Ansprüche 1 bis 4, gekennzeichnet durch einen Verteiler (D) für die Lichtträgerfrequenz-Referenz, der als optischer Sternkoppler ausgebildet ist.

6. Nachrichtennetz nach einem der Ansprüche 1 bis 5, gekennzeichnet durch ein gemeinsames Lichtfrequenzkanalvielfach (S) für die Verknüpfung der Sendeeinrichtungen (T) und Empfangseinrichtungen (R), das als optischer Sternkoppler ausgebildet ist.

7. Nachrichtennetz nach einem der Ansprüche 1 bis 5, gekennzeichnet durch ein Lichtfrequenzkanalvielfach (S), das als räumlich weit verteiltes, verzweigtes Fasernetzwerk ausgebildet ist.

8. Nachrichtennetz nach einem der Ansprüche 1 bis 7, gekennzeichnet durch eine Empfangseinrichtung (R*), die für Überwachungsaufgaben dem zentralen Rechner (CPU) zugeordnet ist.

9. Nachrichtennetz nach einem der Ansprüche 1 bis 8, gekennzeichnet durch Systemkomponenten, die in integrierter Technik aufgebaut sind.

## Claims

1. A communications network using monomode fibres as transmissions means for optical channels multiplexed in the lightcarrier frequency domain and provided according to the heterodyne principle to produce connections between connected communications sources and communications sinks characterized in :
a) a laser reference unit (Ref. Gen.) with a distributor (D) for the supply of transmitter equipments (T) and receiver equipments (R), which equipments are associated and connected with the communications sources and communications sinks, with a light carrier reference ;
b) tunable transmitter lasers in the transmitter equipments (T), by means of which one carrier frequency each is provided for signals supplied by associated communications sources ;
c) tunable local lasers in the receiver equipments (R), by means of which one fixed intermediate frequency to be rectified is formed in each case for the signals intended for the associated communications sinks, and
d) a common light frequency channel multiplex (S), via which the transmitter equipments (T) and the receiver equipments (R) are connected.

2. A communications network as claimed in claim 1, characterized in that the laser reference unit (Ref. Gen.) produces a fixed lightcarrier reference lattice.

3. A communications network as claimed in claim 1 or 2, characterized in a central computer (CPU) for the association and administration of channels.

4. A communications network as claimed in one of claims 1 to 3, characterized in wideband channels with a mutual distance between lightcarrier frequencies in the GHz range.

5. A communications network as claimed in one of claims 1 to 4, characterized in a distributor (D) for the lightcarrier frequency reference represented by an optical star coupler.

6. A communications network as claimed in one of claims 1 to 5, characterized in a common lightfrequency channel multiplex (S) for linking the transmitter equipments (T) and the receiver equipments (R), represented by an optical star coupler.

7. A communications network as claimed in one of claims 1 to 5, characterized in that the lightfrequency channel multiplex (S) is represented by a spatially widely distributed, branched fiber network.

8. A communications network as claimed in one of claims 1 to 7, characterized in a receiver equipment (R*) associated for monitoring tasks with the central computer (CPU).

9. A communications network as claimed in one of claims 1 to 8, characterized in system components constructed in integrated technology.

**Revendications**

1. Réseau de communication utilisant des fibres monomodes comme moyen de transmission pour des canaux optiques multiplexés dans le domaine de fréquences d'ondes optiques porteuses, mis à disposition suivant le principe de l'hétérodyne, pour la création de liaisons entre les sources d'information et les puits d'information raccordés, caractérisé par :

— une unité de référence à laser (Ref.-Gen.) avec un distributeur (D) pour l'alimentation d'installations d'émission (T) et de réception (R) qui sont associées aux sources et aux puits d'information, avec une référence d'onde optique porteuse ;

— des lasers émetteurs accordables dans les installations d'émission (T), au moyen desquels est tenue à disposition chaque fois une fréquence porteuse pour les signaux qui sont fournis par les sources d'information associées ;

— des lasers locaux accordables dans les installations de réception (R), au moyen desquels est formée chaque fois une fréquence intermédiaire fixe, à redresser, pour les signaux qui sont destinés aux puits d'information associés ; et

— un multiplex commun de canaux pour fréquences optiques (S), par lequel les installations d'émission (T) et les installations de réception (R) sont reliées.

2. Réseau de communication suivant la revendication 1, caractérisé par une unité de référence à laser (Ref.-Gen.) qui engendre un réseau de référence fixe pour les ondes optiques porteuses.

3. Réseau de communication suivant la revendication 1 ou 2, caractérisé par un calculateur central (CPU) pour l'attribution et l'administration des canaux.

4. Réseau de communication suivant l'une des revendications 1 à 3, caractérisé par des canaux à larges bandes avec un écart relatif de fréquence des ondes optiques dans le domaine des GHz.

5. Réseau de communication suivant l'une des revendications 1 à 4, caractérisé par un distributeur (D) pour la référence de fréquences d'onde optique porteuse, qui est conformé en coupleur optique en étoile.

6. Réseau de communication suivant l'une des revendications 1 à 5, caractérisé par un multiplex de canaux pour fréquences optiques commun (S) pour la liaison des installations d'émission (T) et des installations de réception (R), qui est relié en coupleur optique en étoile.

7. Réseau de communication suivant l'une des revendications 1 à 5, caractérisé par un multiplex de canaux pour fréquences optiques (S), qui est relié comme un réseau de fibres largement réparti et ramifié dans l'espace.

8. Réseau de communication suivant l'une des revendications 1 à 7, caractérisé par une installation de réception (R*) qui est associée au calculateur central (CPU) pour des tâches de surveillance.

9. Réseau de communication suivant l'une des revendications 1 à 8, caractérisé par des éléments du système construit suivant la technique des circuits intégrés.

Fig.1

0 077 292

# F i g. 2

Fig.3

Fig.4

Central Station                    Zentrale

# Fig. 5

# Fig. 6